# EUROPEAN PATENT APPLICATION

(11) **EP 4 527 991 A1**
(43) Date of publication of application: **26.03.2025**
(21) Application number: 23812080.2
(22) Date of filing: 19.05.2023
(51) Int. Cl.: C25D 11/04, C25D 11/16, C25D 11/24, C22C 21/10, C22F 1/053, H05K 5/04, H05K 5/00, C25D 11/18, C22C 21/00, C22F 1/04

(54) **ALUMINIUM ALLOY PLATE AND ELECTRONIC DEVICE COMPRISING SAME**

(30) Priority: 25.05.2022 KR 20220063918; 16.09.2022 KR 20220116795
(71) Applicant: Samsung Electronics Co., Ltd., Suwon-si, Gyeonggi-do 16677 (KR)
(72) Inventor: PARK, Jongmoon, Suwon-si Gyeonggi-do 16677 (KR); KIM, Youngoh, Suwon-si Gyeonggi-do 16677 (KR); KIM, Junghan, Suwon-si Gyeonggi-do 16677 (KR); PARK, Hyungki, Suwon-si Gyeonggi-do 16677 (KR); SON, Kidoc, Suwon-si Gyeonggi-do 16677 (KR); CHOI, Hyunsuk, Suwon-si Gyeonggi-do 16677 (KR)
(74) Representative: HGF
(86) International application number: PCT/KR2023/006875
(87) International publication number: WO 2023/229306

(57) **Abstract**

According to various embodiments of the present disclosure, an anodized aluminum plate may be provided, the anodized aluminum plate including a first region and a second region connected to the first region, wherein the first region includes at least one first pore having a first diameter, the second region includes a second-1 region connected to the first region and a second-2 region extending from the second-1 region, and the second-1 region includes at least one second pore having a second diameter smaller than the first diameter. Various other embodiments may be possible.

## Description

### [Technical Field]

Various embodiments of the disclosure relate to an electronic device, e.g., an aluminum alloy plate and an electronic device including the same.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

Recently, aluminum is being widely used as an exterior material to enhance the quality of the portable electronic devices. Aluminum is a light metal which has been used most thus far by the human race most and has myriad applications. In particular, aluminum alloys have aluminum, as their major component, mixed with other elements, e.g., copper, magnesium, manganese, tin, or zinc.

To use the aluminum alloy as an exterior material, there are various surface treatment methods and, among these, the anodizing method is a surface treatment method that utilizes the characteristic of forming an aluminum oxide film by oxidizing the metal surface by oxygen generated from the anode by passing electricity through the metal. Aluminum alloy surfaces will develop an even, protective layer of aluminum oxide (Al2O3) up to a few tens of micrometers by anodizing. The high hardness of the layer contributes to give aluminum enhanced abrasion resistance. The surface of anodized metal retains the original texture of the metal, making it highly aesthetic and corrosion-resistant.

### [Detailed Description of the Invention]

### [Technical Problem]

Aluminum alloys are frequently used as exterior materials for mobile phones and electronic devices because they are treated with a surface treatment method called anodizing, which increases corrosion resistance and wear resistance by growing a uniform oxide film on the surface, and they also have a beautiful appearance through coloring with organic dyes.

These aluminum alloys may be anodized to provide differences in brightness by varying the thickness of the film, and may exhibit a color that appears darker or deeper as the film thickness increases due to increased voltage or temperature or longer processing time. For the color of the commonly used aluminum alloy, the brightness is increased by making the thickness of the film smaller than that when it is black.

Recently, aluminum alloys have been attracting the attention of users or consumers by implementing pastel colors or specific patterns on the outer surface. As such, aluminum treatment methods, such as masking, multiple anodizing, or heterogeneous metal bonding, are suggested to design the outer surface of the aluminum alloy during the manufacturing process of the aluminum alloy.

Masking had a significant difference in texture between the masked and unmasked areas, required an additional process to remove the mask, and sometimes caused spots to form because the mask was not completely removed.

Multiple anodizing had the problems of increased time and costs due to repeated anodizing in the manufacturing process, and caused aluminum alloy defects during the process of removing the previously formed film before the subsequent anodizing treatment.

Heterogeneous metal bonding had the inconvenience of performing a different chemical process for each material and accordingly causing interference therebetween.

According to various embodiments of the disclosure, there may be provided an aluminum plate in which an area visually separated is formed through even a single anodizing treatment and an electronic device including the same.

The disclosure is not limited to the foregoing embodiments but various modifications or changes may rather be made thereto without departing from the spirit and scope of the disclosure.

### [Technical Solution]

According to various embodiments of the disclosure, an anodized aluminum plate may comprise a first area and a second area connected to the first area. The first area may include at least one first pore having a first diameter. The second area may include a 2-1th area connected to the first area and a 2-2th area extending from the 2-1th area. The 2-1th area may include at least one second pore having a second diameter smaller than the first diameter.

According to various embodiments of the disclosure, an electronic device may comprise a housing, a display disposed in the housing, and an aluminum plate forming at least a portion of the housing. The aluminum plate may include a first area and a second area connected to the first area. The first area may include at least one first pore having a first diameter. The second area may include a 2-1th area connected to the first area and a 2-2th area extending from the 2-1th area. The 2-1th area may include at least one second pore having a second diameter smaller than the first diameter.

According to various embodiments of the disclosure, a method for manufacturing an aluminum plate may comprise a process of preparing a first aluminum material including at least one additive and a second aluminum material not including the additive, an aluminum material bonding process of forming the aluminum plate by bonding the first aluminum material and the second aluminum material through preheat treatment; an aging heat treatment process of the aluminum plate, and an anodizing process of anodizing the aging heat-treated aluminum plate.

### [Advantageous Effects]

According to various embodiments of the disclosure, a difference in brightness may be formed between a first area and a second area of an aluminum plate even through a single anodizing treatment.

According to various embodiments of the disclosure, an electronic device may have enhanced aesthetics by including an aluminum plate having visually separated areas formed therein.

According to various embodiments of the disclosure, a difference in brightness may be implemented through a simple process, and since only one anodizing treatment is performed, similar texture may be formed between areas.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating an electronic device in a network environment according to an embodiment;
FIG. 2 is a view illustrating an unfolded state of an electronic device according to various embodiments of the disclosure;
FIG. 3 is a view illustrating a folded state of an electronic device according to various embodiments of the disclosure;
FIG. 4 is an exploded perspective view illustrating a foldable electronic device according to various embodiments of the disclosure;
FIG. 5 is a plan view illustrating a cover structure according to various embodiments of the disclosure;
FIG. 6 is a cross-sectional view taken along line A-A' of FIG. 5 according to various embodiments of the disclosure;
FIG. 7 is a flowchart illustrating a manufacturing process of an aluminum plate according to various embodiments of the disclosure;
FIG. 8A is a photo illustrating a cross section where a film is formed via an anodizing process in bonding a first aluminum material and a second aluminum material according to various embodiments of the disclosure;
FIG. 8B is a photo illustrating a cross section of an aluminum plate showing pores formed in a film layer according to various embodiments of the disclosure;
FIGS. 9A and 9B are photos illustrating a cross section of a base material layer and a film layer of an aluminum plate according to various embodiments of the disclosure;
FIGS. 10A, 10B, 10C, and 10D are views illustrating a process of forming precipitates when an aluminum plate is thermally treated according to various embodiments of the disclosure;
FIGS. 11A and 11B are photos illustrating a cover structure according to various embodiments of the disclosure;
FIGS. 12A and 12B are photos illustrating a state in which a character string is engraved in a cover structure according to various embodiments of the disclosure;
FIG. 13 is a front perspective view illustrating an electronic device according to various embodiments of the disclosure;
FIG. 14 is a rear perspective view illustrating an electronic device according to various embodiments of the disclosure;
FIG. 15 is an exploded perspective view illustrating an electronic device according to various embodiments of the disclosure; and
FIG. 16 is a photo illustrating a cover structure according to various embodiments of the disclosure.

### [Mode for Carrying out the Invention]

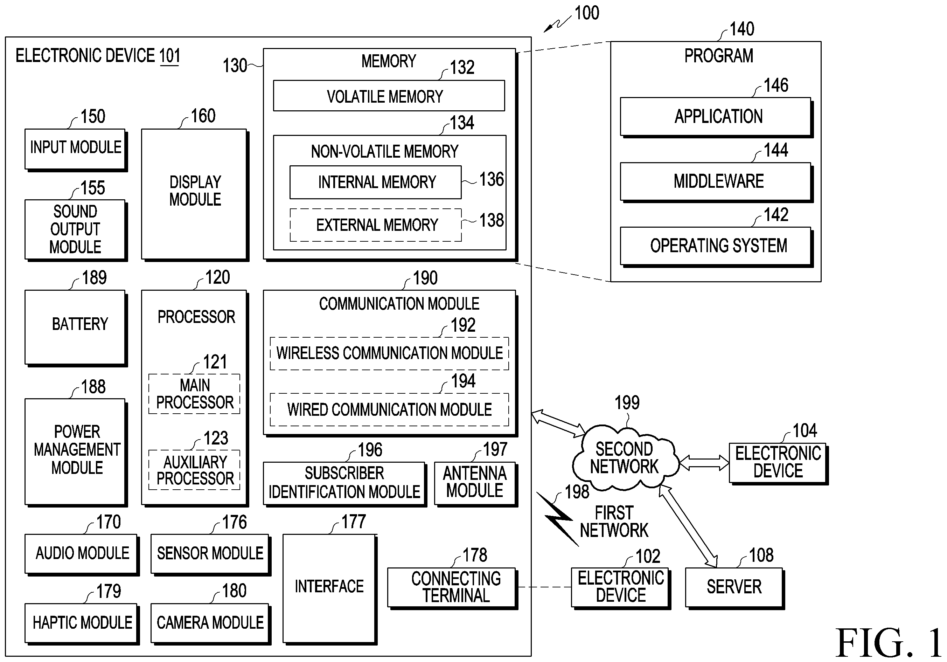

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

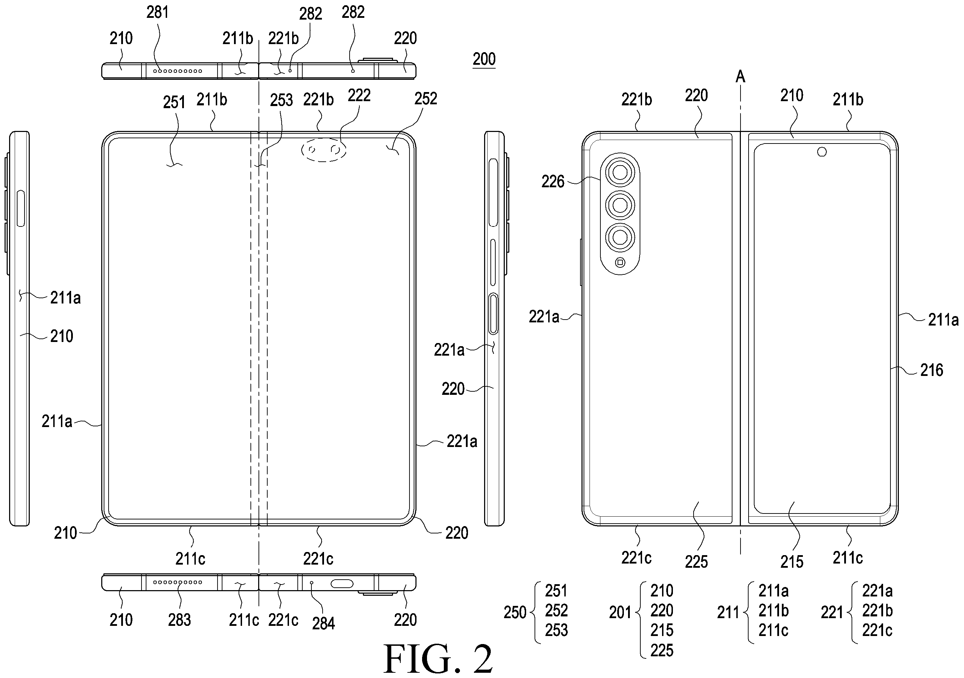

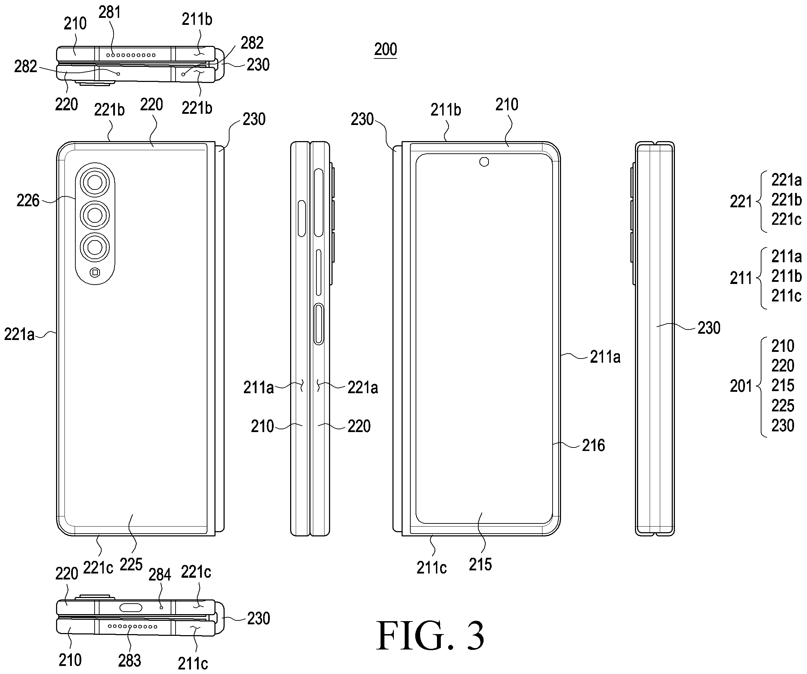

FIG. 2 is a view illustrating an unfolded state of an electronic device according to various embodiments of the disclosure. FIG. 3 is a view illustrating a folded state of an electronic device 200 according to various embodiments of the disclosure.

FIG. 2 is a view illustrating an unfolded status among folding statuses of a foldable electronic device according to various embodiments of the disclosure. FIG. 3 is a view illustrating a folded state of a foldable electronic device according to various embodiments of the disclosure. The electronic device 200 of FIGS. 2 and 3, as an example of the electronic device 101 shown in FIG. 1, may be a foldable or bendable electronic device.

Referring to FIGS. 2 and 3, according to an embodiment, an electronic device 200 may include a foldable housing 201 and a flexible or foldable display 250 (hereinafter, simply " flexible display 250") (e.g., the display module 160 of FIG. 1) disposed in a space formed by the foldable housing 201. According to an embodiment, the surface where the flexible display 250 is disposed (or the surface where the flexible display 250 is viewed from the outside of the electronic device 200) may be defined as the front surface of the electronic device 200. The opposite surface of the front surface may be defined as a rear surface of the electronic device 200. The surface surrounding the space between the front and back surfaces may be defined as a side surface of the electronic device 200.

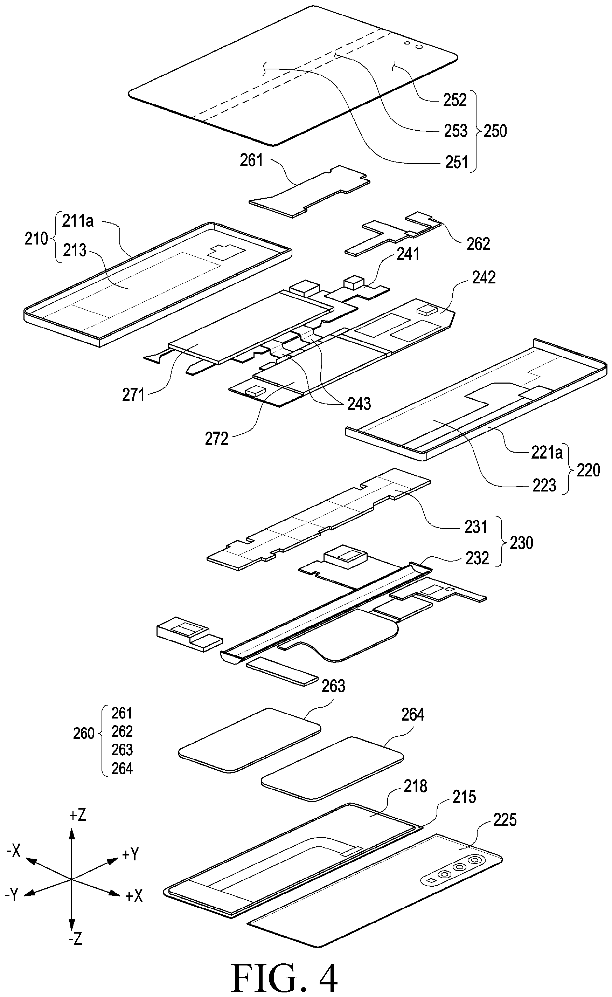

According to various embodiments, the foldable housing 201 may include a first housing 210, a second housing 220 including a sensor area 222, a first rear cover 215, a second rear cover 225, and a hinge assembly 230. According to an embodiment, the hinge assembly 230 may include a hinge cover (not shown) (e.g., the hinge cover 232 of FIG. 4) that covers the foldable portion of the foldable housing 201. The foldable housing 201 of the electronic device 200 are not limited to the shape and coupling shown in FIGS. 2 and 3 but may rather be implemented in other shapes or via a combination and/or coupling of other components. For example, in another embodiment, the first housing 210 and the first rear cover 215 may be integrally formed with each other, and the second housing 220 and the second rear cover 225 may be integrally formed with each other.

According to various embodiments, an illuminance sensor (not shown) and an image sensor (not shown) may be disposed in the sensor area 222. The illuminance sensor may detect the amount of light around the electronic device 200. The image sensor may convert the light incident through the camera lens into a digital signal. The illuminance sensor and the image sensor may be visually exposed to the flexible display 250. According to another embodiment, the illuminance sensor and the image sensor may not be visually exposed. For example, the camera may be configured as an under display camera (UDC). Pixels in one area of the flexible display 250 corresponding to the location of the UDC may be configured to differ from pixels in other areas, so that the image sensor and/or camera may not be visually exposed.

According to various embodiments, the first housing 210 may be connected to the hinge assembly 230 and may include a first front surface facing in a first direction and a first rear surface facing in a direction opposite to the first direction. The second housing 220 may be connected to the hinge assembly 230 and may include a second front surface facing in a second direction and a second rear surface facing in a direction opposite to the second direction. The first housing 210 may rotate about the hinge assembly 230 with respect to the second housing 220. The electronic device 200 may transform to a folded status or an unfolded status.

According to various embodiments, the first housing 210 may include a first side surface 211a disposed to be spaced apart from and in parallel to the folding axis A of the hinge assembly 230 between the first front surface and the first rear surface, and the second housing 220 may include a fourth side surface 221a disposed to be spaced apart from and in parallel to the folding axis A of the hinge assembly 230 between the second front surface and the second rear surface. Further, the first housing 210 may include a second side surface 211b perpendicular to the first side surface 211a and having an end connected with the first side surface 211a and another end connected with the hinge assembly 230 and a third side surface 211c perpendicular to the first side surface 211a and having an end connected with the first side surface 211a and another end connected with the hinge assembly 230 and spaced apart from and in parallel to the second side surface 211b. The second housing 220 may include a fifth side surface 221b perpendicular to the fourth side surface 221a and having an end connected with the fourth side surface 221a and another end connected with the hinge assembly 230 and a sixth side surface 221c perpendicular to the fourth side surface 221a and having an end connected with the fourth side surface 221a and another end connected with the hinge assembly 230 and spaced apart from and in parallel to the fifth side surface 221b. When the first housing 210 is folded about the hinge assembly 230 with respect to the second housing 220 (e.g., FIG. 3), the first side surface 211a may approach the fourth side surface 221a and, when the first housing 210 is unfolded about the hinge assembly 230 with respect to the second housing 220 (e.g., FIG. 2), the first side surface 211a may move away from the fourth side surface 221a.

According to an embodiment, in the fully folded state of the electronic device 200, the first front surface may face the second front surface and, in the fully unfolded state, the first direction may be identical to the second direction. **In** the fully unfolded state, the distance between the first side surface 211a and the fourth side surface 221a may be the largest.

According to various embodiments, the first housing 210 and the second housing 220 are disposed on both sides of the folding axis A and be overall symmetrical in shape with respect to the folding axis A. As described below, the angle or distance between the first housing 210 and the second housing 220 may be varied depending on whether the electronic device 200 is in the unfolded state, the folded state, or the partially unfolded (or partially folded) intermediate state.

According to various embodiments, as shown in FIG. 2, the first housing 210 and the second housing 220 together may form a recess to receive the flexible display 250. According to various embodiments, the first housing 210 and the second housing 220 may at least partially be formed of a metal or non-metallic material with a rigidity selected to support the flexible display 250. At least a portion formed of metal may provide a ground plane of the electronic device 200 and may be electrically connected with a ground line formed on the printed circuit board disposed in the foldable housing 201.

According to various embodiments, a protection member (not shown) may be disposed outside the flexible display 250. The protection member may be formed integrally with the side surface of the foldable housing 201 or as a separate structure. The flexible display 250 may not adhere to the side surface of the foldable housing 201 and/or the protection member. A gap may be formed between the flexible display 250 and the protection member. The protection member may be configured to cover the internal configuration of the electronic device 200 from the outside or to protect the internal configuration of the electronic device 200 from external impact. According to an embodiment, the protection member may be configured to cover the line mounted on the flexible display 250 from the outside or to protect it from an external impact.

According to various embodiments, the first rear cover 215 may be disposed on one side of the folding axis A on the rear surface of the electronic device 200 and have, e.g., a substantially rectangular periphery which may be surrounded by the first housing 210. Similarly, the second rear cover 225 may be disposed on the opposite side of the folding axis A on the rear surface of the electronic device 200 and its periphery may be surrounded by the second housing 220.

According to various embodiments, the first rear cover 215 and the second rear cover 225 may be substantially symmetrical in shape with respect to the folding axis A. However, the first rear cover 215 and the second rear cover 225 are not necessarily symmetrical in shape. In another embodiment, the electronic device 200 may include the first rear cover 215 and the second rear cover 225 in various shapes. In another embodiment, the first back cover 215 may be integrally formed with the first housing 210, and the second back cover 225 may be integrally formed with the second housing 220.

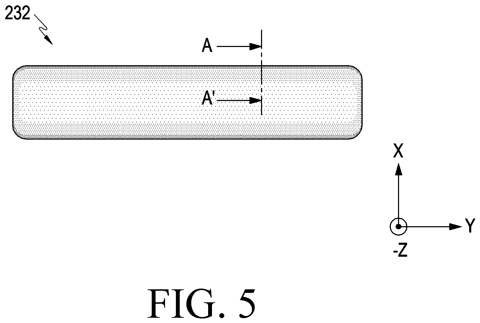

According to various embodiments, the first rear cover 215, the second rear cover 225, the first housing 210, and the second housing 220 may form a space where various components (e.g., a printed circuit board or battery) of the electronic device 200 may be disposed. According to an embodiment, one or more components may be disposed or visually exposed on the rear surface of the electronic device 200. For example, at least a portion of a sub display (not shown) (e.g., the sub display 218 of FIG. 5) may be visually exposed through a first back surface area 216 of the first back cover 215. For example, one or more components or sensors may be visually exposed through a second rear surface area 226 of the second rear cover 225. According to various embodiments, the sensor may include a proximity sensor and/or a rear-facing camera.

According to various embodiments, the front camera disposed on the front surface (e.g., the second front surface) of the electronic device 200 or the rear camera exposed through the second rear area 226 of the second rear cover 225 may include one or more lenses, an image sensor, and/or an image signal processor. The flash may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 200.

Referring to FIG. 3, the hinge cover (e.g., the hinge cover 232 of FIG. 5) included in the hinge assembly 230 may be disposed between the first housing 210 and the second housing 220 to hide the internal components (e.g., the hinge structure 231 of FIG. 5). According to an embodiment, the hinge assembly 230 may be hidden by a portion of the first housing 210 and second housing 220 or be exposed to the outside depending on the state (the unfolded state, intermediate state, or folded state) of the electronic device 200.

According to an embodiment of the present invention, as shown in FIG. 2, in the unfolded state (e.g., a fully unfolded state) of the electronic device 200, the hinge assembly 230 may be hidden not to be exposed by the first housing 210 and the second housing 220. As another example, as shown in FIG. 3, in the folded state (e.g., a fully folded state) of the electronic device 200, the hinge assembly 230 may be exposed to the outside between the first housing 210 and the second housing 220. As another example, in an intermediate state in which the first housing 210 and the second housing 220 are folded with a certain angle, the hinge assembly 230 may be partially exposed to the outside between the first housing 210 and the second housing 220. However, in this case, the exposed area may be smaller than that in the completely folded state. In an embodiment, the hinge assembly 230 may include a curved surface.

According to various embodiments, the flexible display 250 may be disposed in a space formed by the foldable housing 201. For example, the flexible display 250 may be seated in a recess formed by the foldable housing 201 and may be seen from the outside through the front surface (e.g., the first front surface and/or the second front surface) of the electronic device 200. According to an embodiment, the flexible display 250 may constitute most of the front surface (e.g., the first front surface and/or the second front surface) of the electronic device 200. Accordingly, the front surface (e.g., the first front surface and/or the second front surface) of the electronic device 200 may include the flexible display 250 and a partial area of the first housing 210 and a partial area of the second housing 220 adjacent to the flexible display 250. The rear surface (e.g., the first rear surface and/or second rear surface) of the electronic device 200 may include the first rear cover 215, a partial area of the first housing 210 adjacent to the first rear cover 215, the second rear cover 225, and a partial area of the second housing 220 adjacent to the second rear cover 225.

According to various embodiments, the flexible display 250 may mean a display at least a portion of which may be transformed into a flat or curved surface. According to an embodiment, the flexible display 250 may include a folding area 253, a first display area 251 disposed on one side of the folding area 253 (e.g., the left side of the folding area 253 of FIG. 2), and a second display area 252 disposed on the opposite side of the folding area 253 (e.g., the right side of the folding area 1203 of FIG. 2).

However, the segmentation of the flexible display 250 as shown in FIG. 2 is merely an example, and the display 250 may be divided into a plurality of (e.g., four or more, or two) areas depending on the structure or function of the display 200. For example, in the embodiment illustrated in FIG. 2, the area of the flexible display 250 may be divided by the folding area 253 extending parallel to the folding axis A, but in another embodiment, the area of the flexible display 250 may be divided by another folding axis (e.g., a folding axis parallel to the width direction of the electronic device).

According to various embodiments of the disclosure, the flexible display 250 may be coupled with or disposed adjacent to a touch panel equipped with a touch detection circuit or a pressure sensor capable of measuring the strength (pressure) of a touch. For example, the flexible display 250 may be disposed adjacent to or coupled with a touch panel, as an example of the touch pane, which detects a stylus pen of an electromagnetic resonance (EMR) type.

According to various embodiments, the first display area 251 and the second display area 252 may be overall symmetrical in shape with respect to the folding area 253.

Described below are the operation of the first housing 210 and the second housing 220 and each area of the flexible display 250 depending on the state (e.g., the folded state, unfolded state, or intermediate state) of the electronic device 200.

According to various embodiments, when the electronic device 200 is in the unfolded state (e.g., FIG. 2), the first housing 210 and the second housing 220 may be disposed to face in the same direction while being angled at 180 degrees therebetween. The surface of the first display area 251 and the surface of the second display area 252 of the flexible display 250 may be angled at 180 degrees therebetween while facing in the same direction (e.g., forward of the front surface of the electronic device). In this case, the folding area 253 may form the same plane with the first display area 251 and the second display area 252.

According to various embodiments, when the electronic device 200 is in the folded state (e.g., FIG. 3), the first housing 210 and the second housing 220 may be disposed to face each other. The surface of the first display area 251 and the surface of the second display area 252 of the flexible display 250 may face each other while forming a narrow angle (e.g., between 0 degrees and 10 degrees). At least a portion of the folding area 253 may be formed as a curve having a predetermined curvature.

According to various embodiments, when the electronic device 200 is in the intermediate state, the first housing 210 and the second housing 220 may be disposed at a certain angle therebetween. The surface of the first display area 251 and the surface of the second display area 252 of the flexible display 250 may form an angle larger than that in the folded state and smaller than that in the unfolded state. The folding area 253 may at least partially have a curved surface with a predetermined curvature and, in this case, the curvature may be smaller than that when it is in the folded state.

According to various embodiments, the first housing 210 may include first housing holes 281 and 283. According to an embodiment, the first housing holes 281 and 283 may include a1-1th housing hole 281 formed in the second side surface 211b of the first housing 210 and a 1-2th housing hole 283 formed in the third side surface 211c of the first housing 210.

According to various embodiments, the second housing 220 may include second housing holes 282 and 284. According to an embodiment, the second housing holes 282 and 284 may include a 2-1th housing hole 282 formed in the fifth side surface 221b of the second housing 220 and a 2-2th housing hole 284 formed in the sixth side surface 211c of the second housing 220.

FIG. 4 illustrates a spatial coordinate system defined by an X-axis, a Y-axis and a Z-axis orthogonal to each other. Here, the X axis may indicate a width direction of the electronic device, the Y axis may indicate a length direction of the electronic device, and the Z axis may indicate a height (or thickness) direction of the electronic device. In describing various embodiments of the disclosure, the 'first direction and the second direction' may mean directions parallel to the Z-axis.

FIG. 4 is an exploded perspective view illustrating a foldable electronic device according to various embodiments of the disclosure.

Referring to FIG. 4, an electronic device 200 (e.g., the electronic device 101 of FIG. 1 or the electronic device 200 of FIGS. 2 and 3) may include a foldable housing 201, a first housing 210, a second housing 220, a hinge assembly 230, a flexible display 250, a first printed circuit board 241, a second printed circuit board 242, a first battery 271, a second battery 252, and/or a waterproof member 260.

The configuration of the foldable housing 201, the first housing 210, the second housing 220, the hinge assembly 230, and the flexible display 250 of FIG. 4 may be identical in whole or part to the configuration of the foldable housing 201, the first housing 210, the second housing 220, the hinge assembly 230, and the flexible display 250 of FIGS. 2 and 4.

According to various embodiments, the electronic device 200 may include various electronic components (or electrical components) disposed inside or outside the first housing 210 and the second housing 220. The various electronic components may include, e.g., a processor (e.g., the processor 120 of FIG. 1), a memory (e.g., the memory 130 of FIG. 1), an input module (e.g., the input module 150 of FIG. 1), a sound output module (e.g., sound output module 155 of FIG. 1), a display 250 (e.g., the display module 160 of FIG. 1), an audio module (e.g., the audio module 170 of FIG. 1), a sensor (e.g., the sensor module 176 of FIG. 1), an interface (e.g., the interface 177 of FIG. 1), a connecting terminal (e.g., the connecting terminal 178 of FIG. 1), a haptic module (e.g., the haptic module 179 of FIG. 1), a camera module (e.g., the camera module 180 of FIG. 1), a power management module 188, batteries 271 and 272 (e.g., the battery 189 of FIG. 1), a communication module (e.g., the communication module 190 of FIG. 1), a subscriber identification module (e.g., the subscriber identification module 196 of FIG. 1), or an antenna module (e.g., the antenna module 197 of FIG. 1). The electronic components may be appropriately separated and disposed in the inner or outer space of the first housing 210 and the second housing 220. At least one (e.g., the connecting terminal 178) of the components may be omitted from the electronic device 200, or one or more other components may be added in the electronic device 101. Further, some of these components may be integrated into one component.

According to various embodiments, the electronic device 200 is a foldable electronic device, and may include a plurality of batteries to supply and store power required for driving to electronic components. For example, the electronic device 1200 may include a first battery 271 and a second battery 272 disposed in the first housing 210 and the second housing 220, respectively.

According to various embodiments, the electronic device 200 is a foldable electronic device, and may include a first plate 213 and/or a second plate 223 for disposing components in the first housing 210 and the second housing 220. In an embodiment, the first plate 213 may be interpreted as a component of the first housing 210, and the second plate 223 may be interpreted as a component of the second housing 220. In another embodiment, the first plate 213 may be interpreted as a separate component from the first housing 210, and the second plate 223 may be interpreted as a separate component from the second housing 220. Various electronic components and/or circuit boards 241 and 242 may be disposed on the first plate 213 and/or the second plate 223. According to an embodiment, the first plate 213 and the first circuit board 241 may be disposed in the first housing 210, and the second plate 223 and the second circuit board 242 may be disposed in the second housing 220. The first plate 213 may include a first surface facing in the first direction. The second plate 223 may include a second surface facing in the second direction. The first plate 213 and the second plate 223 may be folded or unfolded with respect to each other by the hinge structure 231 formed corresponding to the folding area 253 of the flexible display 250 and be formed to face each other in the folded state and, in the unfolded state, be formed so that the first surface and the second surface face in the same direction.

According to various embodiments, the first circuit board 241 may be disposed under the first plate 213 (-Z-axis direction), and the second circuit board 242 may be disposed under the second plate 223 (-Z-axis direction).

According to various embodiments, signals of the processor for implementing various functions and operations of the electronic device 200 may be transferred through various conductive lines 243 and/or connecting member (connector) (not shown) formed on the printed circuit boards 241 and 242.

According to various embodiments, the foldable housing 201 may include a first housing 210, a second housing 220, a first rear cover 215, a second rear cover 225, and a hinge assembly 230.

According to various embodiments, the flexible display 250 may include a display panel (not shown). In an embodiment, the first plate 213 and the second plate 223 may be disposed between the display panel and the first circuit board 241 and the second circuit board 242. The hinge assembly 230 may be disposed between the first plate 213 and the second plate 223.

According to various embodiments, the electronic device 200 may further include a sub display 218 (e.g., the display module 160 of FIG. 1) disposed between the first housing 210 and the first rear cover 215. According to an embodiment, the sub display 218 may include a display panel (not shown). According to an embodiment, the sub display 218 may be coupled to the first rear cover 215. According to another embodiment, the sub display 218 may be coupled to the first printed circuit board 241. For example, the sub display 218 may be visually exposed to the outside of the electronic device 200 through a first rear area (not shown) (e.g., the first rear area 216 of FIG. 2) of the first rear cover 215.

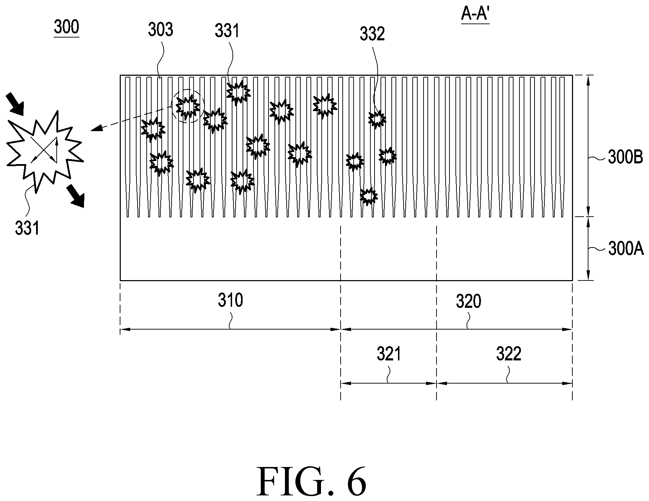

According to various embodiments, the hinge assembly 230 may include a hinge structure 231 and a hinge cover 232. According to an embodiment, the hinge structure 231 may include a hinge module (e.g., the hinge module 231-1 of FIG. 6) and a hinge plate (e.g., the hinge plate 231-2 of FIG. 6). According to an embodiment, the hinge cover 232 may cover the hinge structure 231.

According to various embodiments, the electronic device 200 may include a first circuit board 241 and a second circuit board 242. The first circuit board 241 and the second circuit board 242 may be disposed in a space formed by the first plate 1241, the second plate 223, the first housing 210, the second housing 220, the first rear cover 215, and the second rear cover 225. Components for implementing various functions of the electronic device 200 may be disposed on the first circuit board 241 and the second circuit board 242. According to an embodiment, each of the first circuit board 241 and the second circuit board 242 may include any one of a printed circuit board (PCB), a flexible printed circuit board (PCB), or a rigid-flexible PCB (RF-PCB).

According to various embodiments, the first housing 210 and the second housing 220 may be assembled together to be coupled to two opposite sides of the bracket assembly 230, with the first plate 213 and the second plate 223 coupled with the flexible display 250. For example, the first housing 210 may be coupled by sliding on one side of the hinge assembly 230, and the second housing 220 may be coupled by sliding on the other side of the hinge assembly 230.

According to various embodiments, the waterproof member 260 may be disposed inside the electronic device 200. According to an embodiment, the waterproof member 260 may include a first waterproof member 261, a second waterproof member 262, a third waterproof member 263, and/or a fourth waterproof member 264.

According to various embodiments, the first waterproof member 261 may be disposed between the first housing 210 and the flexible display 250. According to an embodiment, the first waterproof member 261 may be disposed between the first plate 213 and the first display area 251. According to an embodiment, the first waterproof member 261 may be formed of a waterproof tape. According to an embodiment, the first waterproof member 261 may be bonded to the first housing 210 and/or the first plate 213, and may be bonded to the flexible display 250 (e.g., the first display area 251). According to an embodiment, the first waterproof member 261 may have a closed loop shape. For example, the first waterproof member 261 may include at least one closed loop area. According to an embodiment, the first waterproof member 261 may include a waterproof tape, and may restrict liquid inflow from the outside of the closed loop area of the first waterproof member 261 to the inside of the closed loop area.

According to various embodiments, the second waterproof member 262 may be disposed between the second housing 220 and the flexible display 250. According to an embodiment, the second waterproof member 262 may be disposed between the second plate 223 and the second display area 252. According to an embodiment, the second waterproof member 262 may be formed of a waterproof tape. According to an embodiment, the second waterproof member 262 may be bonded to the second housing 220 and/or the second plate 223, and may be bonded to the flexible display 250 (e.g., the second display area 252). According to an embodiment, the second waterproof member 262 may have a closed loop shape. For example, the second waterproof member 262 may include at least one closed loop area. According to an embodiment, the second waterproof member 262 may include a waterproof tape, and may restrict liquid inflow from the outside of the closed loop area of the second waterproof member 262 to the inside of the closed loop area.

According to various embodiments, the third waterproof member 263 may be disposed between the first housing 210 and the first rear cover 215. According to an embodiment, the third waterproof member 263 may be disposed between the first plate 213 and the sub display 218. According to an embodiment, the third waterproof member 263 may be formed of a waterproof tape. According to an embodiment, the third waterproof member 263 may be bonded to the first housing 210 and/or the first plate 213, and may be bonded to the first rear cover 215 and/or the sub display 218. According to an embodiment, the third waterproof member 263 may have a closed loop shape. For example, the third waterproof member 263 may include at least one closed loop area. According to an embodiment, the third waterproof member 263 may include a waterproof tape, and may restrict liquid inflow from the outside of the closed loop area of the third waterproof member 261 to the inside of the closed loop area.

According to various embodiments, the fourth waterproof member 264 may be disposed between the second housing 220 and the second rear cover 225. According to an embodiment, the fourth waterproof member 264 may be disposed between the second plate 223 and the second rear cover 225. According to an embodiment, the fourth waterproof member 264 may be formed of a waterproof tape. According to an embodiment, the fourth waterproof member 264 may be bonded to the second housing 220 and/or the second plate 223, and may be bonded to the second rear cover 225. According to an embodiment, the fourth waterproof member 264 may have a closed loop shape. For example, the fourth waterproof member 264 may include at least one closed loop area. According to an embodiment, the fourth waterproof member 264 may include a waterproof tape, and may restrict liquid inflow from the outside of the closed loop area of the fourth waterproof member 264 to the inside of the closed loop area.

According to various embodiments, the first waterproof member 261, the second waterproof member 262, the third waterproof member 263, and the fourth waterproof member 264 may be disposed not to contact the hinge assembly 230.

According to various embodiments, as the waterproof member 260 is disposed inside the electronic device 200, the electronic device 200 may restrict the inflow of liquid from the outside of the electronic device 200 into the electronic device 200.

FIG. 5 is a plan view illustrating a cover structure according to various embodiments of the disclosure.

Referring to FIG. 5, an electronic device (e.g., the electronic device 200 of FIGS. 2 to 4) may include a cover structure 232 (e.g., the hinge structure 232 of FIG. 4).

According to various embodiments, the cover structure 232 may be the hinge cover 232 that covers at least a portion of the hinge structure (e.g., the hinge structure 231 of FIG. 4) of the electronic device.

According to an embodiment, the cover structure 232 may be defined and interpreted as a component of the hinge assembly (e.g., the hinge assembly 230 of FIG. 4). According to some embodiments, the cover structure 232 and/or the hinge assembly may be defined and interpreted as a component of the housing (e.g., the foldable housing 201 of FIGS. 2 to 3).

According to various embodiments, the cover structure 232 may include an inner surface facing the hinge structure and an outer surface (or surface) facing in a direction (e.g., the -Z direction of FIG. 4) opposite to the inner surface. According to an embodiment, the outer surface (or surface) of the cover structure 232 may be a portion that includes a curved surface and is visually exposed to the user.

According to various embodiments, the cover structure 232 or at least a portion of the cover structure 232 may be formed of an aluminum plate (e.g., the aluminum plate 300 of FIG. 6).

According to an embodiment, the cover structure 232 or at least a portion of the cover structure 232 (e.g., the outer surface that is a portion facing in the -Z direction in FIG. 5) may be formed of an anodized aluminum plate, so that the brightness visually recognized between at least a portion of the outer surface and a portion different from the at least a portion may be implemented differently.

FIG. 6 is a cross-sectional view taken along line A-A' of FIG. 5 according to various embodiments of the disclosure.

Referring to FIG. 6, a cover structure (e.g., the cover structure 232 of FIG. 5) may include an aluminum plate 300. The aluminum plate 300 may be an anodized aluminum plate 300.

According to various embodiments, the aluminum plate 300 may be an exterior material of an electronic device (e.g., the electronic device 200 of FIGS. 2 to 4) or may be a component of a housing (e.g., the foldable housing 201 of FIGS. 2 to 3 or the hinge assembly 230 of FIG. 4).

According to various embodiments, the aluminum plate 300 may be formed of a first aluminum material and a second aluminum material.

According to various embodiments, it may include a first area 310 and a second area 320 connected to the first area 310.

According to an embodiment, the first aluminum material and the second aluminum material may be bonded or attached to each other through heat treatment to form the aluminum plate 300.

According to various embodiments, the aluminum plate 300 may be anodized. According to an embodiment, the anodized aluminum plate 300 may include a base material layer 300A and a film layer 300B.

For example, the first aluminum material and the second aluminum material are thermally bonded to form the aluminum plate 300, and the portion oxidized by the anodizing of the aluminum plate 300 may form the thin layer 300B while the non-oxidized portion may form the base material layer 300A. In an embodiment, the film layer 300B may be defined as a portion oxidized as at least a portion of the base material layer 300A is anodized.

According to various embodiments, the aluminum plate 300 may include a first area 310 and a second area 320 connected to the first area 310. According to an embodiment, the first area 310 may be an area formed of the first aluminum material, and the second area 320 may be an area formed of the second aluminum material.

According to an embodiment, the second area 320 may include a 2-1th area 321 connected to the first area 310 and a 2-2th area 322 extending from the 2-1th area 321.

According to an embodiment, the film layer 300B may include the film layer 300B of the first area 310 and the film layer 300B of the second area 320. According to an embodiment, the base material layer 300A may include the base material layer 300A of the first area 310 and the base material layer 300A of the second area 320.

For example, the film layer 300B of the first area 310 may be an oxidized portion of the aluminum plate 300 in the first aluminum material, and the film layer 300B of the second area 320 may be an oxidized portion of the aluminum plate 300 in the second aluminum material. For example, the base material layer 300A of the first area may be a non-oxidized portion of the aluminum plate 300 in the first aluminum material, and the second area 320 may be a non-oxidized portion of the base material layer 300A in the second aluminum material.

According to an embodiment, the first area 310 may be defined and interpreted as an oxidized portion and a non-oxidized portion of the first aluminum material constituting the aluminum plate 300, and the second area 320 may be defined and interpreted as an oxidized portion and a non-oxidized portion of the second aluminum material constituting the aluminum plate 300.

According to various embodiments, the first area 310 may include at least one first pore 331 having a first diameter. According to an embodiment, the first pores 331 may be disposed on the film layer 300B of the first area 310. The at least one first pore 331 may be defined and interpreted as a hole or an empty space formed inside the film layer 300B of the first area 310. In an embodiment, the at least one first pore 331 may have an irregular surface. In an embodiment, the first diameter of the at least one first pore 331 may be defined as a first separation distance that is a separation distance between the farthest portions of the surface of the at least one first pore 331, but is not limited thereto. For example, the first diameter may be defined as a diameter of a first pore 331 having a virtual sphere shape having the first separation distance as the diameter, but is not limited thereto. Further, the first diameter may be defined and interpreted as an average diameter obtained by averaging the values of the first diameters of the plurality of first pores 331, but is not limited thereto.

According to various embodiments, the 2-1th area 321 may include at least one second pore 332 having a second diameter. According to an embodiment, the second diameter may be smaller than the first diameter. According to an embodiment, the second pore 332 may be disposed on the film layer 300B of the 2-1th area 321. The at least one second pore 332 may be defined and interpreted as a hole or an empty space formed inside the film layer 300B of the second area 320. In an embodiment, the at least one second pore 332 may have an irregular surface. In an embodiment, the second diameter of the at least one second pore 332 may be defined as a second separation distance, which is a separation distance between the farthest portions of the surface of the at least one second pore 332, but is not limited thereto. For example, the second diameter may be defined as a diameter of the second pore 332 having a virtual sphere shape having the second separation distance as the diameter, but is not limited thereto. The second diameter may be defined and interpreted as an average diameter obtained by averaging the values of the second diameters of the plurality of second pores 332, but is not limited thereto.

According to various embodiments, the first area 310 and the second area 320 may include at least one anodizing pore 303. In an embodiment, the anodizing pore 303 may be formed in the film layer 300B of the first area 310 and the second area 320, and may be in the form of a circular column or a polygonal column.

According to various embodiments, the number of the first pores 331 may be larger than the number of the second pores 332 in a unit volume (or the same volume).

According to various embodiments, since the aluminum plate 300 includes the first pore 331 and the second pore 332 having a different diameter from the first pore 331, a difference in brightness may be formed between the first area 310 and the second area 320. For example, the light introduced from the outside of the aluminum plate 300 may be scattered in the first pores 331 or the second pores 332.

According to various embodiments, since the first pore 331 of the first area 310 is larger than the second pore 332 of the second area 320 (or the 2-1th area 321) and the number of first pores 331 of the first area 310 is larger than the number of second pores 332 of the second area 320 (or the 2-1th area 321) per unit volume, the first area 310 may further scatter light than the second area 320 (or the 2-1th area 321). Accordingly, the first area 310 may have a greater brightness than the second area 320 (or the 2-1th area 321).

According to various embodiments, the 2-2th area 322 may have no pores or may have pores having a smaller diameter, or fewer pores, than the 2-1th area 321. Accordingly, the 2-2th area 322 may have a higher brightness than the 2-1th area 321.

According to various embodiments, since different brightnesses are implemented in the first area 310, the 2-1th area 321, and the 2-2th area 322, the user may feel aesthetics through a difference in brightness implemented in the aluminum plate 300.

According to various embodiments, the first pore 331 or the second pore 332 may have a crushed shape, but is not limited thereto.

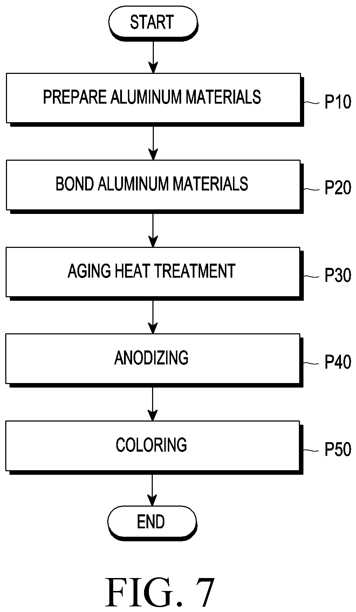

FIG. 7 is a flowchart illustrating a manufacturing process of an aluminum plate according to various embodiments of the disclosure.

Referring to FIGS. 6 to 7, a manufacturing process of an aluminum plate may include an aluminum material preparation process P10, an aluminum material bonding process P20, an aging heat treatment process P30, an anodizing process P40, and/or a coloring process P50.

The aluminum material preparation process P10 may include a process of preparing a first aluminum material and a second aluminum material.

The first aluminum material may be formed of an aluminum alloy or an aluminum material including an impurity or at least one additive. For example, the impurity may include at least one of titanium (Ti) or iron (Fe). The at least one additive may include at least one of zinc (Zn), magnesium (Mg), or copper (Cu).

According to an embodiment, the first aluminum material may be formed of about 5.0 to about 6.0 wt% of zinc (Zn), about 2.0 to about 3.0 wt% of magnesium (Mg), about 1.0 to about 2.0 wt% of copper (Cu), and aluminum and impurities as the rest.

The second aluminum material may be formed of an aluminum alloy or an aluminum material that does not include an additive.

According to an embodiment, the second aluminum material may be form about 90 weight% or more of aluminum and impurities. For example, the impurity may include at least one of titanium (Ti) or iron (Fe).

The aluminum material bonding process P20 may include a process of forming the aluminum plate 300.

The aluminum material bonding process may include a preheating process of preheating the first aluminum material and the second aluminum material for about 1 hour in a temperature range of about 300 to 400 degrees, and a rolling process of bonding the preheated first aluminum material and the preheated second aluminum material through a rolling method. In an embodiment, the rolling process may be performed for a time (e.g., a time shorter than one hour) shorter than the preheating process.

The first aluminum material and the second aluminum material may be bonded through the rolling process to form the aluminum plate 300.

According to an embodiment, at least a portion of the additives of the first aluminum material may be transferred or diffused to the second aluminum material bonded to the first aluminum material when the rolling process is performed.

The aging heat treatment process P30 may include a process of generating and growing an additive as a precipitate.

For example, the aging heat treatment process P30 may include a process of performing aging heat treatment on the aluminum plate 300 for about 48 hours or more in a temperature range of about 200 degrees to about 300 degrees.

According to an embodiment, when the aluminum plate 300 is subjected to aging heat treatment for about 48 hours or more, at least one additive dispersed in the first area 310 or the 2-1th area 321 may be lumped together to form at least one precipitate. The at least one precipitate may include an MgZn2-based precipitate or a Zn-Mg-Cu-based precipitate.

When the aging heat treatment process continues, the size of at least one precipitate may increase as the aging heat treatment time increases.

**In** an embodiment, at least one precipitate may be formed in the first aluminum material portion and the second aluminum material portion. At least one precipitate formed in the second aluminum material portion may be formed through the additive diffused into the second aluminum material in the rolling process.

In an embodiment, the at least one precipitate formed in the second aluminum material portion may be smaller than the at least one precipitate formed in the first aluminum material portion. For example, since the at least one precipitate formed in the second aluminum material portion is formed from at least one inevitable impurity transferred or diffused from the first aluminum material portion, it may grow as smaller than the at least one precipitate grown in the first aluminum material portion.

For example, when the aging heat treatment process is performed until about 128 hours, at least one precipitate in the first area 310 may be grown by about 1.0 um (micrometer) or less in size, and at least one precipitate in the 2-1th area 321 may be grown by about 0.1 um or less in size.

The anodizing process P40 may include a process of anodizing the aluminum plate 300 where at least one precipitate is formed. For example, the anodizing may be performed by putting the aluminum plate 300 into a piece of equipment accommodating an electrolyte and providing a designated voltage and temperature.

The electrolyte may be an electrolyte including at least one or all of sulfuric acid, oxalic acid, phosphoric acid, and chromic acid.

The aluminum plate 300 may be anodized for about 50 minutes in a voltage range of about 11V to about 14V and/or a temperature range of about 10 degrees to about 15 degrees in the electrolyte.

At least a portion of the aluminum plate 300 may be oxidized to form the film layer 300B. The non-oxidized remaining portion of the aluminum plate 300 may be formed of the base material layer 300A. The film layer 300B may be formed of a crystal structure of the oxide film (Al2O3).

The film layer 300B may include anodizing pores, first pores 331, and second pores 332 formed through anodizing. In an embodiment, the anodizing pore 303 in the form of a circular column or a polygonal column may be formed in both the film layer 300B of the first area 310 and the film layer 300B of the second area 320.

The first pores 331 and the second pores 332 may be fine holes formed as the precipitate generated or grown by heat treatment of at least one additive is dissolved by the electrolyte (e.g., sulfuric acid solution) when the aluminum plate 300 is anodized. For example, the precipitate may be ionized by the electrolyte during anodizing and discharged from the aluminum plate 300. The aluminum plate 300 may include the first pores 331 and the second pores 332, which are fine holes formed by emptying a portion or space occupied by at least one inevitable impurity.

At least one first pore 331 may be formed in the film layer 300B of the first area 310 formed of the first aluminum material. At least one second pore 332 may be formed in the film layer 300B of the 2-1th area 321 formed of the second aluminum material.

The precipitate of the 2-1th area 321 may be smaller than the precipitate of the first area 310. Accordingly, the at least one second pore 332 formed by dissolving the precipitate of the 2-1th area 321 may be smaller than the at least one first pore 331 formed by dissolving the precipitate of the first area 310.

The anodized aluminum plate 300 may have an area in which the first area 310, the 2-1th area 321, and the 2-2th area 322 are visually separated from each other by having different brightness values.

In an embodiment, the first area 310 may be identified to be darker than the 2-1th area 321 by having a lower brightness value than the 2-1th area 321, and the 2-1th area 321 may be identified to be darker than the 2-2th area 322 by having a lower brightness value than the 2-2th area 322.

In an embodiment, the anodized aluminum plate 300 may implement different brightness values even through one anodizing treatment.

The coloring process P50 may be performed by coloring the film layer 300B of the anodized aluminum plate 300 with an organic dye.

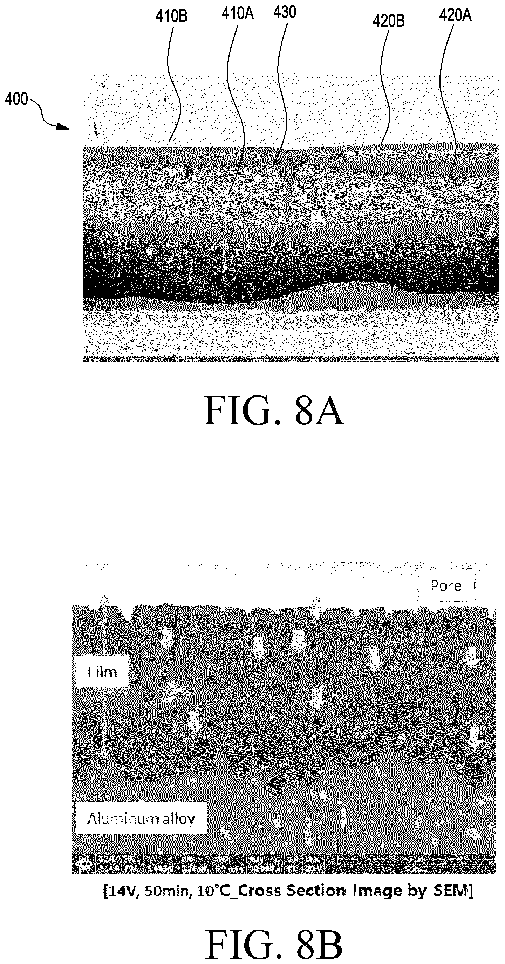

FIG. 8A is a photo illustrating a cross section where a film is formed via an anodizing process with a first aluminum material and a second aluminum material bonded to each other according to various embodiments of the disclosure. FIG. 8B is a photo illustrating a cross section of an aluminum plate showing pores formed in a film layer according to various embodiments of the disclosure.

FIG. 8A illustrates a state in which a cross section of an anodized aluminum plate is captured. The base material layers 410A and 420A and the film layers 410B and 420B may be formed as anodizing is performed with the first aluminum material 410 and the second aluminum material 420 bonded. For example, at least a portion of the first aluminum material 410 may be anodized to form the oxidized film layer 410B, and the non-oxidized remaining portion thereof may form the base material layer 410A. For example, at least a portion of the second aluminum material 420 may be anodized to form the oxidized film layer 420B, and the non-oxidized remaining portion thereof may form the base material layer 410B.

In the film layers 410B and 410B, a valley portion 430 that is a film portion deeper than another portion may be formed at a bonding boundary between the first aluminum material and the second aluminum material, and the thickness of the film layer 410B of the first aluminum material 410 other than the valley portion 430 may be about 15% smaller than the thickness of the film layer 420B of the second aluminum material 420. The thickness of the film layer 410B of the first aluminum material 410 being smaller than the thickness of the film layer 420B of the second aluminum material 420 may be attributed to a difference in size and distribution of the precipitate generated and grown through heat treatment.

FIG. 8A illustrates a state in which at least one precipitate is formed in the base material layer 410A of the first aluminum material 410 and at least one precipitate is formed in the base material layer 420B of the second aluminum material 420. Also illustrates is a state in which at least one first pore is formed in the film layer 410B of the first aluminum material 410, and at least one second pore is formed in the valley portion 430, which is an area in which the film layer 410A of the first aluminum material 410 and the film layer 410B of the second aluminum material 420 are bonded.

Referring to FIG. 8A, at least one first pore formed in the film layer 410B of the first aluminum material 410 may have a larger size than at least one second pore formed in the valley portion 430. The film layer 410B of the second aluminum material 420 has a precipitate formed therein, but does not include at least one additive among zinc (Zn), magnesium (Mg), or copper (Cu), and thus has no pore formed therein. At least one first pore or at least one second pore may have a fine hole shape. Further, the anodizing pores (e.g., the anodizing pores 303 of FIG. 6) formed in the film layers 410B and 420B by being anodized may have a cylindrical shape or a polygonal column shape.

FIG. 8B illustrates a base material layer and a film layer, and at least one pore (e.g., a first pore or a second pore) formed inside the film layer. The aluminum alloy of FIG. 8B may be defined and/or referred to as a base material layer. The at least one pore may have substantially the same size as the at least one precipitate, and the at least one pore may scatter the introduced light.

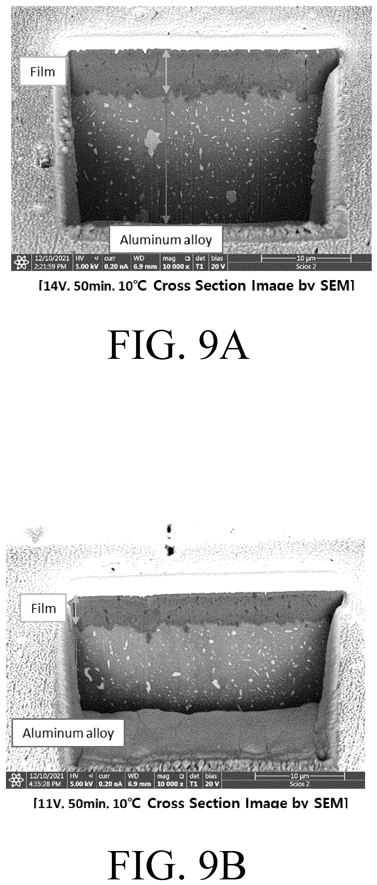

FIGS. 9A and 9B are photos illustrating a cross section of a base material layer and a film layer of an aluminum plate according to various embodiments of the disclosure.

FIG. 9A illustrates a state in which an aluminum plate is anodized in a voltage range of about 14 V, a temperature range of about 10 degrees, and a time range of about 50 minutes, and FIG. 9B illustrates a state in which an aluminum plate is anodized in a voltage range of about 11 V, a temperature range of about 10 degrees, and a time range of about 50 minutes.

Referring to FIGS. 9A and 9B, when the voltage range is changed during the anodizing of the aluminum plate, the thickness of the film layer formed on the aluminum plate may vary. Referring to FIGS. 9A and 9B, when the voltage range is changed during the anodizing of the aluminum plate, the size of the pores formed in the aluminum plate may not be changed. The aluminum alloy of FIGS. 9A to 9B may be defined and/or referred to as a base material layer.

Referring to FIG. 9A, when the aluminum plate is anodized in a voltage range of about 11 V, the thickness of the film layer may be about 4.3 micrometers (um).

Referring to FIG. 9B, when the aluminum plate is anodized in a voltage range of about 14 V, the thickness of the film layer may be about 6.4 micrometers (um).

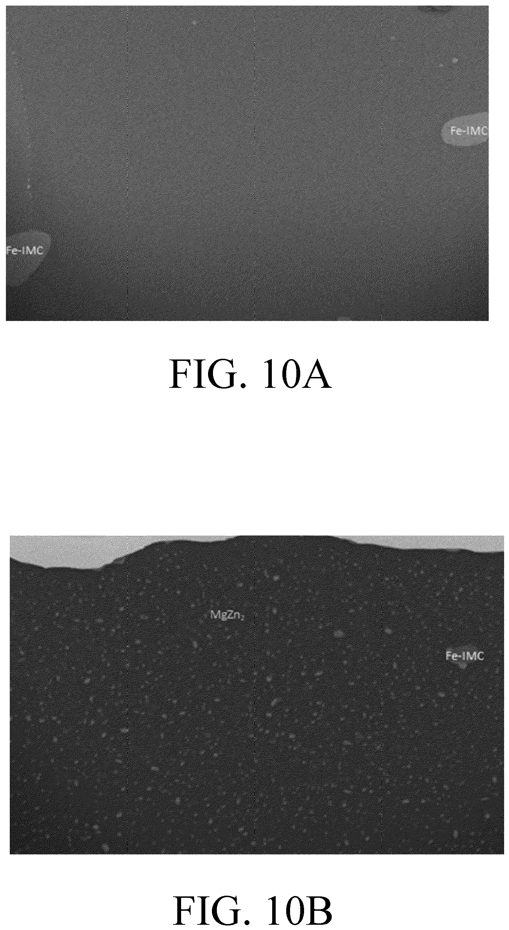

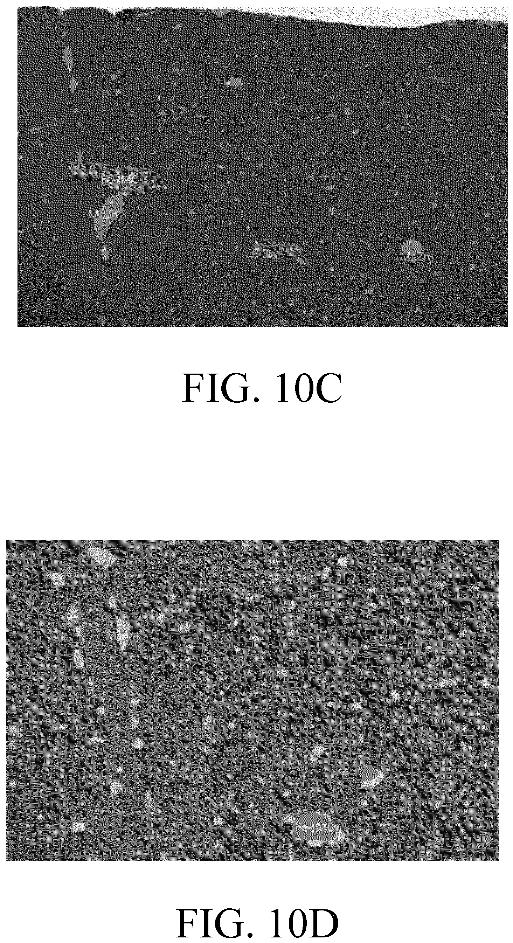

FIGS. 10A, 10B, 10C, and 10D are views illustrating a process of forming precipitates when an aluminum plate is thermally treated according to various embodiments of the disclosure.

FIGS. 10A, 10B, 10C, and 10D may illustrate at least one precipitate that is grown or generated inside an aluminum plate when a heat treatment process is performed on the aluminum plate in which a first aluminum material and a second aluminum material are bonded.

FIG. 10A illustrates a state before a heat treatment process is performed on an aluminum plate, FIG. 10B illustrates a state after heat treatment of the aluminum plate for about 48 hours in a temperature range of about 200 to 300 degrees, FIG. 10C illustrates a state after heat treatment of the aluminum plate for about 96 hours in a temperature range of about 200 to 300 degrees, and FIG. 10D illustrates a state after heat treatment of the aluminum plate for about 128 hours in a temperature range of about 200 to 300 degrees.

Referring to FIG. 10B, after heat treatment for about 48 hours, one or more additives formed of aluminum form at least one precipitate.

Referring to FIG. 10C, after heat treatment for about 96 hours, at least one precipitate formed of aluminum may be shown to have grown in size or diameter of the precipitate as compared to FIG. 10B.

Referring to FIG. 10D, after heat treatment for about 128 hours, at least one inevitable precipitate formed of aluminum may be shown as grown into a precipitate having a diameter or size of about 0.1 micrometers (um) to about 1 um.

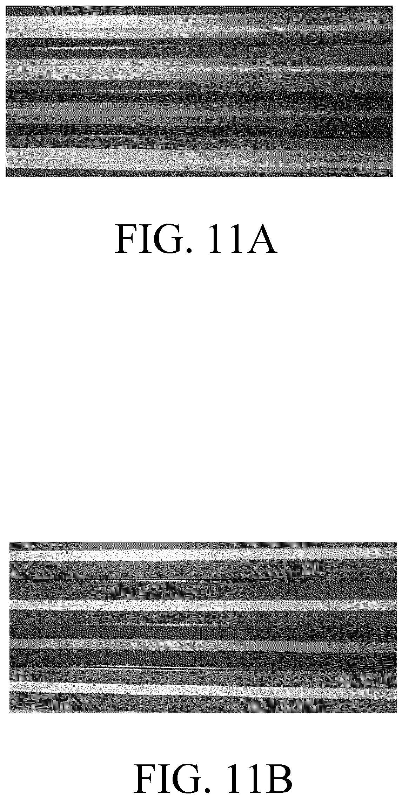

FIGS. 11A and 11B are photos illustrating a cover structure according to various embodiments of the disclosure.

FIG. 11A illustrates a state in which a difference in brightness is formed so that a surface layer of an anodized aluminum plate is recognized by the user as separated into five areas. The plate material separated into five areas may be manufactured by bonding an aluminum material containing one or more additives Zn, Mg, and Cu less than the first aluminum material between the first aluminum material and the second aluminum material. For example, by adjusting the ratio of at least one additive (e.g., zinc (Zn), magnesium (Mg), or copper (Cu)), an aluminum plate recognized as visually separated into three or more areas may be manufactured. For example, by bonding and anodizing an aluminum material containing at least one additive in a first ratio, an aluminum material not containing at least one additive, and an aluminum material containing at least one additive in a ratio higher (or lower) than the first ratio, an aluminum plate having a plurality of visually distinct areas may be manufactured. By bonding the aluminum materials repeatedly or alternately multiple times and anodizing, an aluminum plate having three or more areas (e.g., four areas or more) may be manufactured.

FIG. 11B illustrates a state in which a difference in brightness is formed so that a surface layer of an anodized aluminum plate is recognized by the user as separated into three areas.

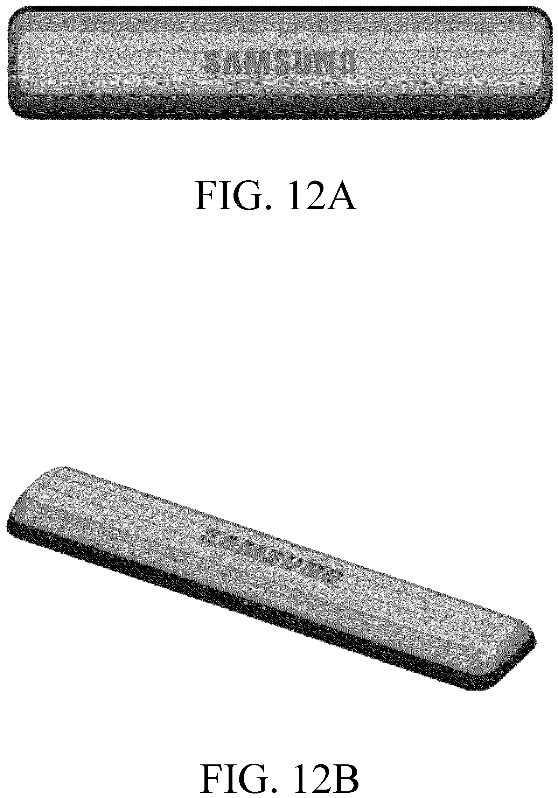

FIGS. 12A and 12B are photos illustrating a state in which a character string is engraved in a cover structure according to various embodiments of the disclosure.

FIGS. 12A and 12B illustrate a state in which a plurality of character strings are engraved in an outer surface (or a surface layer) of a cover structure (e.g., the cover structure 232 of FIG. 5).

Referring to FIGS. 12A and 12B, as the outer surface of the cover structure is anodized to have different brightness values, the plurality of character strings may have different brightness values and thus be visually separated from each other.

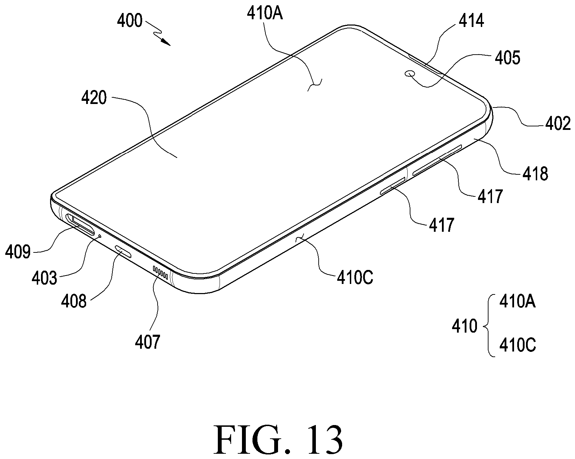

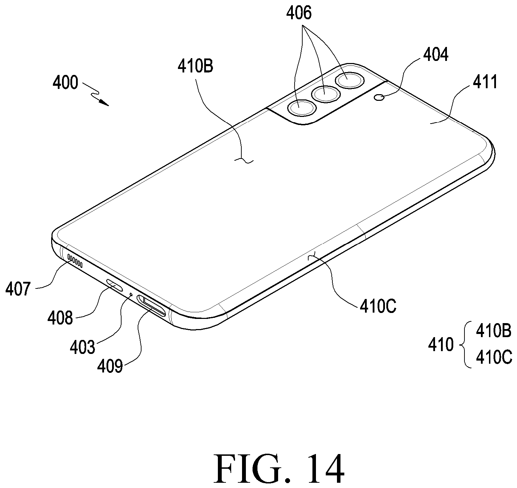

FIG. 13 is a front perspective view illustrating an electronic device according to various embodiments of the disclosure. FIG. 14 is a rear perspective view illustrating an electronic device according to various embodiments of the disclosure.

Referring to FIGS. 13 and 14, according to an embodiment, an electronic device 400 may include a housing 410 with a front surface 410A, a rear surface 410B, and a side surface 410C surrounding a space between the front surface 410A and the rear surface 410B. According to another embodiment (not shown), the housing 410 may denote a structure forming part of the front surface 410A of FIG. 13, the rear surface 410B, and the side surfaces 410C of FIG. 14. For example, the housing 410 may include a front plate 402 and a rear plate 411. According to an embodiment, at least part of the front surface 410A may have a substantially transparent front plate 402 (e.g., a glass plate or polymer plate including various coat layers). The rear surface 410B may be formed by a rear plate 411. The rear plate 411 may be formed of, e.g., glass, ceramic, polymer, metal (e.g., titanium (Ti), stainless steel (STS), aluminum (Al), or magnesium (Mg)), or a combination of at least two thereof. The side surface 410C may be formed by a side bezel structure (or a "side member") 418 that couples to the front plate 402 and the rear plate 411 and includes a metal and/or polymer. According to an embodiment, the rear plate 411 and the side bezel plate 418 may be integrally formed together and include the same material (e.g., glass, metal, such as aluminum, or ceramic). According to another embodiment, the front surface 410A and/or the front plate 402 may be interpreted as a part of the display 420.

According to an embodiment, the electronic device 400 may include at least one of a display 420, audio modules 403, 407, and 414 (e.g., the audio module 170 of FIG. 1), a sensor module (e.g., the sensor module of FIG. 1). 176), camera modules 405 and 406 (e.g., the camera module 180 of FIG. 1), a key input device 417 (e.g., the input module 150 of FIG. 1), and connector holes 408 and 409 (e.g., the connection terminal 178 of FIG. 1). According to an embodiment, the electronic device 400 may exclude at least one (e.g., the connector hole 409) of the components or may add other components. According to an embodiment, the display 420 may be visually revealed through, e.g., a majority portion of the front plate 402.

According to an embodiment, the surface (or the front plate 402) of the housing 410 may include a screen display area formed as the display 420 is visually exposed. For example, the screen display area may include the front surface 410A.

According to another embodiment (not shown), the electronic device 400 may include a recess or opening formed in a portion of the screen display area (e.g., the front surface 410A) of the display 420 and may include at least one or more of an audio module 414, a sensor module (not shown), a light emitting device (not shown), and a camera module 405 aligned with the recess or opening. According to another embodiment (not shown), at least one or more of the audio module 414, sensor module (not shown), camera module 405, fingerprint sensor (not shown), and light emitting device (not shown) may be included on the rear surface of the screen display area of the display 420.

According to an embodiment (not shown), the display 420 may be disposed to be coupled with, or adjacent, a touch detecting circuit, a pressure sensor capable of measuring the strength (pressure) of touches, and/or a digitizer for detecting a magnetic field-type stylus pen.

**In** some embodiments, at least a portion of the key input device 417 may be disposed on the side bezel structure 418.

According to an embodiment, the audio modules 403, 407, and 414 may include, e.g., a microphone hole 403 and speaker holes 407 and 414. A microphone for acquiring external sounds may be disposed in the microphone hole 403. In some embodiments, a plurality of microphones may be disposed to detect the direction of the sound. The speaker holes 407 and 414 may include an external speaker hole 407 and a phone receiver hole 414. In an embodiment, the speaker holes 407 and 414 and the microphone hole 403 may be implemented as a single hole, or speakers may be included without the speaker holes 407 and 414 (e.g., piezo speakers).

According to an embodiment, the sensor modules (not shown) may generate an electrical signal or data value corresponding to an internal operating state or external environmental state of the electronic device 400. The sensor module (not shown) may include, e.g., a first sensor module (not shown) (e.g., a proximity sensor) and/or a second sensor module (not shown) (e.g., a fingerprint sensor) disposed on the front surface 410A of the housing 410. The sensor module (not shown) may include a third sensor module (not shown) (e.g., an HRM sensor) and/or a fourth sensor module (not shown) (e.g., a fingerprint sensor) disposed on the rear surface 410B of the housing 410). In an embodiment (not shown), the fingerprint sensor may be disposed on the rear surface 410B as well as on the front surface 410A (e.g., the display 420) of the housing 410. The electronic device 400 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 405 and 406 may include a front camera module 405 disposed on the first surface 410A of the electronic device 400 and a rear camera module 406 and/or a flash 404 disposed on the rear surface 410B. The camera modules 405 and 406 may include one or more lenses, an image sensor, and/or an image signal processor. The flash 404 may include, e.g., a light emitting diode (LED) or a xenon lamp. According to an embodiment, two or more lenses (an infrared (IR) camera, a wide-angle lens, and a telephoto lens) and image sensors may be disposed on one surface of the electronic device 400.

According to an embodiment, the key input device 417 may be disposed on the side surface 410C of the housing 410. According to an embodiment, the electronic device 400 may exclude all or some of the above-mentioned key input devices 417 and the excluded key input devices 417 may be implemented in other forms, e.g., as soft keys, on the display 420.

According to an embodiment, the light emitting device may be disposed on, e.g., the front surface 410A of the housing 410. The light emitting device (not illustrated) may provide, e.g., information about the state of the electronic device 400 in the form of light. According to another embodiment, the light emitting device (not shown) may provide a light source that interacts with, e.g., the front camera module 405. The light emitting device (not illustrated) may include, e.g., a light emitting diode (LED), an infrared (IR) LED, and/or a xenon lamp.

According to an embodiment, the connector holes 408 and 409 may include a first connector hole 408 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 409 for receiving a storage device (e.g., a subscriber identification module (SIM) card). According to an embodiment, the first connector hole 408 and/or the second connector hole 409 may be omitted.

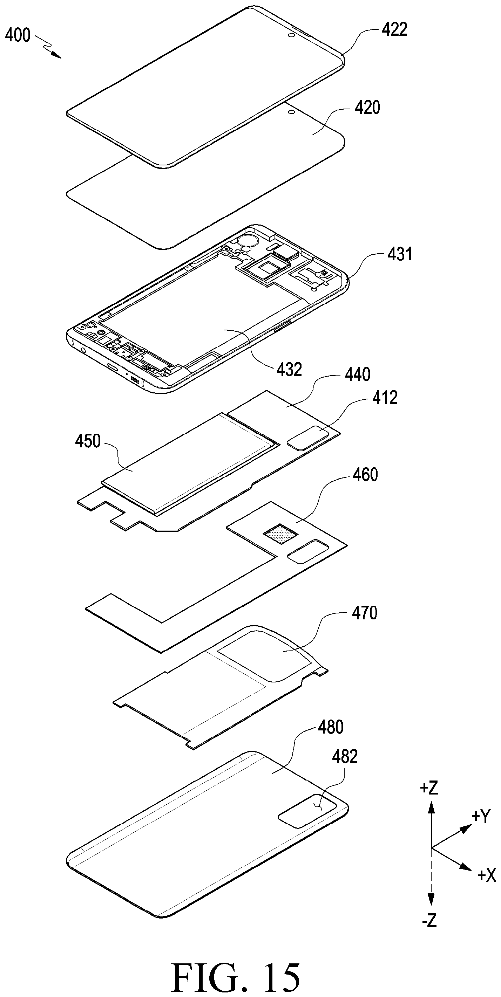

FIG. 15 is an exploded perspective view illustrating an electronic device according to various embodiments of the disclosure.

Referring to FIG. 15, an electronic device 400 (e.g., the electronic device 400 of FIGS. 13 and 14) may include at least one of a front plate 422 (e.g., the front plate 402 of FIG. 13), a display 420. (e.g., the display 420 of FIG. 13), a bracket 432 (e.g., a front supporting member), a printed circuit board 440, a battery 450, a rear case 460 (e.g., a rear supporting member), an antenna 470, and a rear plate 480 (e.g., the rear plate 411 of FIG. 14). According to an embodiment, the electronic device 400 may exclude at least one (e.g., the rear case 460) of the components or may add other components. At least one of the components of the electronic device 400 may be the same or similar to at least one of the components of the electronic device 400 of FIG. 13 or 14 and no duplicate description is made below.

According to an embodiment, the bracket 432 may be disposed inside the electronic device 400 to be connected with the side bezel structure 431 or integrated with the side bezel structure 431. The bracket 432 may be formed of, e.g., a metal and/or non-metallic material (e.g., polymer). The bracket 432 may receive the display 420 on one surface and the printed circuit board 440 on the other surface. A processor (e.g., the processor 120 of FIG. 1), a memory (e.g., the memory 130 of FIG. 1), and/or an interface (e.g., the interface 177 of FIG. 1) may be mounted on the printed circuit board 440.

According to an embodiment, the battery 450 may be a device for supplying power to at least one component (e.g., the camera module 412) of the electronic device 400. The battery 450 may include, e.g., a primary cell which is not rechargeable, a secondary cell which is rechargeable, or a fuel cell. At least a portion of the battery 450 may be disposed on substantially the same plane as the printed circuit board 440. The battery 450 may be integrally or detachably disposed inside the electronic device 400.

According to an embodiment, the rear case 460 may be disposed between the printed circuit board 440 and the antenna 470. For example, the rear case 460 may include one surface to which at least one of the printed circuit board 440 and the battery 450 is coupled, and another surface to which the antenna 470 is coupled.

According to an embodiment, the antenna 470 may be disposed between the rear plate 480 and the battery 450. The antenna 470 may include, e.g., a near-field communication (NFC) antenna, a wireless charging antenna, and/or a magnetic secure transmission (MST) antenna. The antenna 470 may perform short-range communication with, e.g., an external device or may wirelessly transmit or receive power necessary for charging. For example, the antenna 470 may include a coil for wireless charging. According to an embodiment, an antenna structure may be formed by a portion or combination of the side bezel structure 431 and/or the bracket 432.

According to various embodiments, the electronic device 400 may include a camera module 412 disposed in the second housing (e.g., the housing 410 of FIG. 13). According to an embodiment, the camera module 412 may be disposed on the bracket 432 and may be a rear camera module (e.g., the camera module 412 of FIG. 14) capable of obtaining an image of a subject positioned behind (e.g., the -Z direction) of the electronic device 400. According to an embodiment, at least a portion of the camera module 412 may be exposed to the outside of the electronic device 400 through the opening 482 formed in the rear plate 480.

The electronic device 400 disclosed in FIGS. 13 to 15 has a bar-type or platetype appearance but the disclosure is not limited thereto. For example, the illustrated electronic device may be a rollable electronic device or a foldable electronic device. "Rollable electronic device" may mean an electronic device at least a portion of which may be wound or rolled or received in a housing (e.g., the housing 410 of FIG. 13) as the display (e.g., the display 420 of FIG. 15) may be bent and deformed. As the display is stretched out or is exposed to the outside in a larger area according to the user's need, the rollable electronic device may use an expanded second display area. "Foldable electronic device" may mean an electronic device that may be folded in directions to face two different areas of the display or in directions opposite to each other. In general, in the portable state, the foldable electronic device may be folded so that the two different areas of the display face each other and, in an actual use state, the user may unfold the display so that the two different areas form a substantially flat shape. In some embodiments, according to various embodiments of the disclosure, the electronic device 400 may be interpreted as including various electronic devices, such as a laptop computer or a home appliance, as well as a portable electronic device, such as a smart phone.

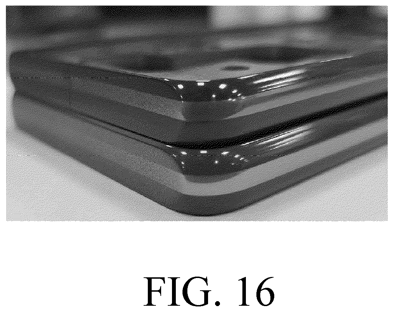

FIG. 16 is a photo illustrating a cover structure according to various embodiments of the disclosure.

The side bezel structure (e.g., the side bezel structure 431 of FIG. 15) of FIG. 16 may have at least a portion formed of an aluminum plate (e.g., the aluminum plate 300 of FIG. 6).

FIG. 16 illustrates a state in which a difference in brightness is formed to allow the outer surface (or surface layer) of the side bezel structure to be recognized as separated into three areas.

According to various embodiments of the disclosure, an anodized aluminum plate (e.g., the aluminum plate 300 of FIG. 6) may comprise a first area (e.g., the first area 310 of FIG. 6) and a second area (e.g., the second area 320 of FIG. 6) connected to the first area. The first area may include at least one first pore (e.g., the at least one first pore 331 of FIG. 6) having a first diameter. The second area may include a 2-1th area (e.g., the 2-1th area 321 of FIG. 6) connected to the first area and a 2-2th area (e.g., the 2-2th area 322 of FIG. 6) extending from the 2-1th area. The 2-1th area may include at least one second pore (e.g., the at least one second pore 332 of FIG. 6) having a second diameter smaller than the first diameter.

According to various embodiments, the aluminum plate may further comprise a base material layer (e.g., the base material layer 300A of FIG. 6) and a film layer (e.g., the film layer 300B of FIG. 6) formed by anodizing at least a portion of the base material layer.

According to various embodiments, the base material layer may include a first base material layer constituting at least a portion of the first area and a second base material layer constituting at least a portion of the second area. The first base material layer and the second base material layer may be bonded through preheat treatment.

According to various embodiments, the first base material layer may include a first aluminum material including at least one additive, and the second base material layer may include a second aluminum material that does not include the additive.

According to various embodiments, the at least one additive may include at least one of zinc (Zn), magnesium (Mg), or copper (Cu).

According to various embodiments, when the aluminum plate is anodized, the at least one additive may form at least one of the at least one first pore or the at least one second pore.

According to various embodiments, the at least one additive may form at least one precipitate through aging heat treatment. The at least one precipitate may form at least one of the at least one first pore or the at least one second pore when the aluminum plate is anodized.

According to various embodiments, the first pore or the second pore may be a hole formed as the at least one precipitate is dissolved by an electrolyte when the aluminum plate is anodized.

According to various embodiments, the first aluminum material and the second aluminum material may include at least one of titanium (Ti) or iron (Fe).

According to various embodiments, the film layer may have a thickness of 4.0 micrometers (um) to 13.0 um.

According to various embodiments, the film layer may have at least one character string engraved therein.

According to various embodiments, the first diameter may be substantially about 1 micrometer (um) or less, and the second diameter may be substantially about 1 um or less.

According to various embodiments, a brightness value of the first area may be lower than a brightness value of the second area.

According to various embodiments, a brightness value of the 2-1th area may be lower than a brightness value of the 2-2th area and higher than the brightness value of the first area.

According to various embodiments, the first pore and the second pore may be formed in the film layer.

According to various embodiments of the disclosure, an electronic device (e.g., the electronic device 101 of FIG. 1, the electronic device 200 of FIGS. 2 and 3, or the electronic device 400 of FIGS. 13 and 14) may comprise a housing (e.g., the foldable housing 201 of FIGS. 2 and 3 or the housing 410 of FIGS. 13 and 14), a display (e.g., the display 250 of FIGS. 2 and 3 or the display 420 of FIGS. 13 and 14) disposed in the housing, and an aluminum plate (e.g., the aluminum plate 300 of FIG. 6) forming at least a portion of the housing. The aluminum plate may include a first area (e.g., the first area 310 of FIG. 6) and a second area (e.g., the second area 320 of FIG. 6) connected to the first area. The first area may include at least one first pore (e.g., the at least one first pore 331 of FIG. 6) having a first diameter. The second area may include a 2-1th area (e.g., the 2-1th area 321 of FIG. 6) connected to the first area and a 2-2th area (e.g., the 2-2th area 322 of FIG. 6) extending from the 2-1th area. The 2-1th area may include at least one second pore (e.g., the at least one second pore 332 of FIG. 6) having a second diameter smaller than the first diameter.

According to various embodiments, the aluminum plate may further include a base material layer (e.g., the base material layer 300A of FIG. 6) and a film layer (e.g., the film layer 300B of FIG. 6) formed by anodizing at least a portion of the base material layer. The base material layer may include a first base material layer constituting at least a portion of the first area and a second base material layer constituting at least a portion of the second area. The first base material layer and the second base material layer may be bonded through preheat treatment.

According to various embodiments, a brightness value of the first area may be lower than a brightness value of the second area.

According to various embodiments of the disclosure, a method for manufacturing an aluminum plate may comprise a process (e.g., the aluminum material preparation process P10 of FIG. 7) of preparing a first aluminum material including at least one additive and a second aluminum material not including the additive, an aluminum material bonding process (e.g., the aluminum material bonding process P20 of FIG. 7) of forming the aluminum plate by bonding the first aluminum material and the second aluminum material through preheat treatment, an aging heat treatment process (e.g., the aging heat treatment process P30 of FIG. 7) of the aluminum plate, and an anodizing process (e.g., the anodizing process P40 of FIG. 7) of anodizing the aging heat-treated aluminum plate.

According to various embodiments, the method may further comprise a coloring process (e.g., the coloring process P50 of FIG. 7) of forming a color for the anodized aluminum plate.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An anodized aluminum plate, comprising:
a first area and a second area connected to the first area,
wherein the first area includes at least one first pore having a first diameter,
wherein the second area includes a 2-1th area connected to the first area and a 2-2th area extending from the 2-1th area, and
wherein the 2-1th area includes at least one second pore having a second diameter smaller than the first diameter.

2. The aluminum plate of claim 1, further comprising:
a base material layer; and
a film layer formed by anodizing at least a portion of the base material layer.

3. The aluminum plate of claim 2, wherein the base material layer includes:
a first base material layer constituting at least a portion of the first area; and
a second base material layer constituting at least a portion of the second area, and
wherein the first base material layer and the second base material layer are bonded through preheat treatment.

4. The aluminum plate of claim 3, wherein the first base material layer includes a first aluminum material including at least one additive, and
wherein the second base material layer includes a second aluminum material that does not include the additive.

5. The aluminum plate of claim 4, wherein the at least one additive includes at least one of zinc (Zn), magnesium (Mg), or copper (Cu).

6. The aluminum plate of claim 4, wherein when the aluminum plate is anodized, the at least one additive forms at least one of the at least one first pore or the at least one second pore.

7. The aluminum plate of claim 4, wherein the at least one additive forms at least one precipitate through aging heat treatment, and
wherein the at least one precipitate forms at least one of the at least one first pore or the at least one second pore when the aluminum plate is anodized.

8. The aluminum plate of claim 7, wherein the first pore or the second pore is a hole formed as the at least one precipitate is dissolved by an electrolyte when the aluminum plate is anodized.

9. The aluminum plate of claim 4, wherein the first aluminum material and the second aluminum material include at least one of titanium (Ti) or iron (Fe).

10. The aluminum plate of claim 2, wherein the film layer has a thickness of 4.0 micrometers (um) to 13.0 um.

11. The aluminum plate of claim 2, wherein the film layer has at least one character string engraved therein.

12. The aluminum plate of claim 2, wherein the first diameter is substantially about 1 micrometer (um) or less, and the second diameter is substantially about 0.1 um or less.

13. The aluminum plate of claim 1, wherein a brightness value of the first area is lower than a brightness value of the second area.

14. The aluminum plate of claim 13, wherein a brightness value of the 2-1th area is lower than a brightness value of the 2-2th area and higher than the brightness value of the first area.

15. The aluminum plate of claim 2, wherein the first pore and the second pore are formed in the film layer.
